Europäisches Patentamt

European Patent Office

Office européen des brevets

(11) Veröffentlichungsnummer : **0 072 404**
B1

(12) **EUROPÄISCHE PATENTSCHRIFT**

(45) Veröffentlichungstag der Patentschrift :
05.03.86

(51) Int. Cl.⁴ : **B 60 T 17/08**, B 60 T 13/04

(21) Anmeldenummer : 82105534.0

(22) Anmeldetag : 24.06.82

(54) **Federspeicher-Bremszylinder.**

(30) Priorität : **18.08.81 DE 3132581**

(43) Veröffentlichungstag der Anmeldung :
**23.02.83 Patentblatt 83/08**

(45) Bekanntmachung des Hinweises auf die Patenterteilung : **05.03.86 Patentblatt 86/10**

(84) Benannte Vertragsstaaten :
**DE FR GB IT SE**

(56) Entgegenhaltungen :
**EP-A- 0 034 803**
**DE-A- 2 503 399**
**DE-A- 2 646 158**

(73) Patentinhaber : **KNORR-BREMSE AG**
**Moosacher Strasse 80 Postfach 401060**
**D-8000 München 40 (DE)**

(72) Erfinder : **Bartlechner, Manfred**
**Am Katzenstein 1**
**D-8031 Wessling (DE)**
Erfinder : **Kerscher, Albert**
**Frühlingstrasse 39**
**D-8057 Eching (DE)**

**Beschreibung**

Die Erfindung bezieht sich auf einen Federspeicherbremszylinder, insbesondere für Schienenfahrzeuge, gemäß dem Oberbegriff des Anspruches 1.

Ein Federspeicher-Bremszylinder der vorstehenden Art ist durch die DE-A 25 03 399 bekanntgeworden. Dieser bekannte Federspeicher-Dremszylinder besitzt eine undrehbar gehaltene, axialverschiebliche Spindel, die auf ein Bremsbetätigungsglied wirkt, und die über ein nichtselbsthemmendes Gewinde mit einer drehbar gelagerten, axial gegen den Federspeicherkolben abgestützten Mutter verschraubt ist. Die bei angelegter Bremse drehmoment belastete Mutter ist über eine Freilaufvorrichtung mit einem Kupplungsring verbunden. Die Freilaufvorrichtung ist in Drehmomentrichtung gesperrt. Der Kupplungsring ist über eine willkürlich schaltbare, selbsteinrastende Klauenkupplung mit einem undrehbaren Mitnehmer drehfest kuppelbar. Durch Lösen der Klauenkupplung gegen eine relativ schwache Federkraft kann von Hand mit geringem Kraft- und Arbeitsaufwand der eingebremste Federspeicher-Bremszylinder schlagartig in seine Lösestellung überführt werden. Nachteilig ist dabei, daß besondere Dämpfungsvorrichtungen erforderlich sind, die verhindern, daß der Kolben ungedämpft durch die momentan freiwerdende Kraft der gespannten Speicherfeder schlagartig in seine Endstellung verschoben wird.

Ein weiterer Nachteil besteht darin, daß der gelöste Federspeicher-Bremszylinder auf mechanischem Wege nicht mehr in eine Bremsstellung gebracht werden kann. Erst nach selbsttätiger Rückführung in die Lösestellung durch Druckmittelbeaufschlagung des Federspeicherkolbens kann durch erneutes Absenken des Druckmitteldruckes wieder eine Bremsstellung erreicht werden.

Aufgabe der Erfindung ist es daher einen Federspeicher-Bremszylinder der eingangs genannten Art anzugeben, bei dem im angelegten Zustand der Bremse und bei Ausfall des Druckmediums der Kraftfluß zwischen der Speicherfeder und der Kolbenstange mechanisch ohne nennenswerten Kraftaufwand von Hand unterbrochen werden kann, so daß es zu keiner schlagartigen Lösung der Bremse kommt, bei der die momentan freiwerdende gespeicherte Energie des Federspeichersmittels besonderer mechanischer Dämpfungsvorrichtungen vernichtet werden muß. Bei wiedervorhandenem Druckmedium soll der Federspeicher-Bremszylinder automatisch wieder betriebsbereit sein. Durch entsprechende Ausgestaltung soll es aber auch möglich sein, den Federspeicher-Bremszylinder nach einer Notlösung und weiterhin nichtvorhandenem Druckmedium von Hand wieder anzulegen.

Die Aufgabe wird erfindungsgemäß mit den kennzeichnenden Merkmalen des Anspruches 1 gelöst.

Vorteilhafte Ausführungen nach der Erfindung sowie Weiterbildungen der Erfindung ergeben sich aus den Merkmalen der Unteransprüche sowie aus der nachfolgenden Beschreibung für bevorzugte Ausführungsbeispiele, die in einer Zeichnung nur schematisch dargestellt sind. Hierin zeigt :

Figur 1 einen Schnitt durch einen ersten erfindungsgemäßen Federspeicher-Bremszylinder in Achsrichtung mit einer als Friktionsfeder ausgebildeten schaltbaren Sperrkupplung und mit am Gehäuse abgestütztem Drehmoment,

Figuren 2, 2a Schnitte durch einen weiteren erfindungsgemäßen Federspeicher-Bremszylinder ähnlich dem nach Fig. 1, aber mit einer schaltbaren Konusbremse,

Figur 3 einen Schnitt durch einen dritten Federspeicher-Bremszylinder nach der Erfindung mit nicht am Gehäuse abgestütztem Drehmoment und mit drehfest gehaltener Spindel und

Figur 4 einen Schnitt durch einen vierten Federspeicher-Bremszylinder nach der Erfindung ähnlich dem nach Fig. 3, aber mit drehbar gelagerter Spindel.

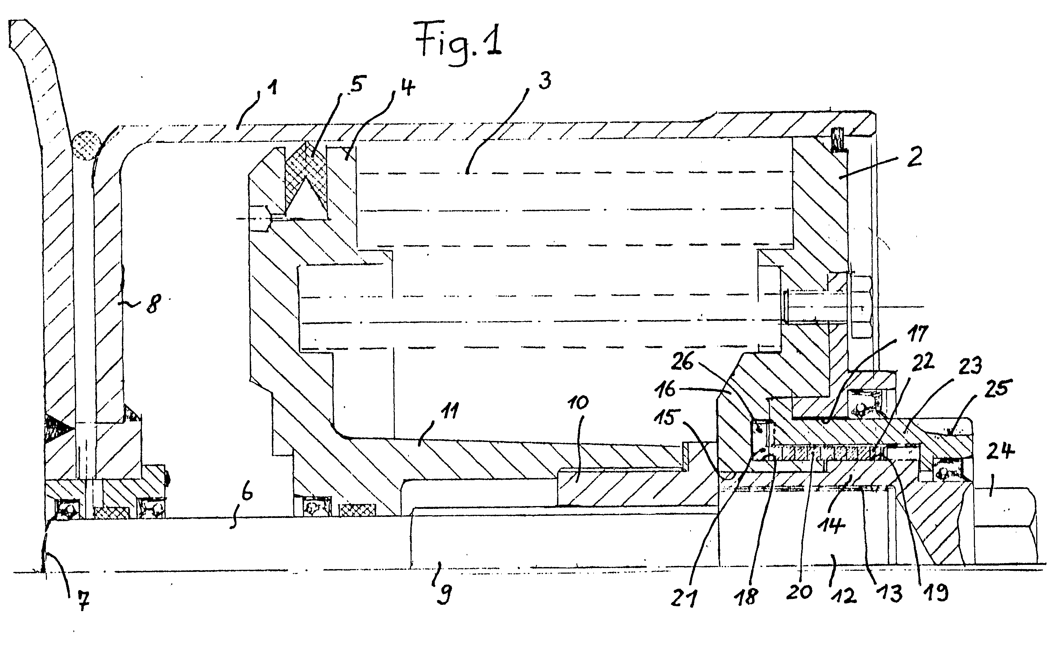

In Fig. 1 besteht der Federspeicher-Bremszylinder aus einem Zylindergehäuse 1, das von einem Zylinderdeckel 2 verschlossen ist. Am Zylinderdeckel 2 stützt sich eine bekannte Speicherfeder 3 ab, die lediglich gestrichelt angedeutet ist. Die Speicherfeder 3 beaufschlagt einen Speicherfeder-Spannkolben 4, der im Zylindergehäuse 1 axial verschieblich geführt ist und an seinem Außenumfang eine Kolbendichtung 5 aufweist. Der Kolben 4 ist in dem Gehäuse 1 längs einer Kolbenstange 6 abgedichtet verschieblich geführt, die mit ihrem vorderen Ende 7 druckdicht durch den Zylinderboden 8 geführt ist, um auf ein Betätigungsglied einer Bremse einwirken zu können, das hier nicht näher beschrieben werden muß. Das hintere Ende der Kolbenstange ist als Spindel 9 ausgebildet, die mit einer Mutter 10 einen Gewindespindeltrieb 9, 10 bildet. Hierzu ist die Mutter am Ende eines rohrförmigen Ansatzes 11 drehfest gehalten, der am Kolben 4 fest ist. Die Mutter greift mit ihrem Gewinde in die Verschraubung der Spindel 9 ein, die im Beispielsfalle mit der Kolbenstange 6 einstückig ist. Die Spindel 9 ist damit mit der Kolbenstange 6 drehbar und axial verschiebbar im Zylindergehäuse 1 gelagert. An ihrem zum Zylinderdeckel gewandten Ende ist die Spindelt 9 mit einem Ansatz 12 versehen, der über ein axiales Schiebeprofil mit einem hülsenförmigen Teil 14 drehfest und axial verschieblich verbunden ist, das hierzu den Ansatz 12 übergreift. Das hülsenförmige Teil 14 ist in einer zentralen Öffnung 15 im Zylinderdeckel 2 drehbar, aber axial unverschieblich gelagert.

In dem verbreiterten mittleren Teil 16 des Zylinderdeckels 2 befindet sich eine Ausnehmung 17, die eine zylindrische Gehäusefläche 18 bildet. Das hülsenförmige Teil besitzt an seinem Umfang ebenfalls einen zylindrischen Flächenabschnitt 19, der an die größere Fläche 18 anschließt. Die Durchmesser der beiden Flächen 18 und 19 sind etwa gleich groß und etwas größer als der Innendurchmesser einer entspannten Friktionsfeder 20, die mit ihrem einen schaltbaren Ende 21 mit mehreren Windungen über die Gehäusefläche 18 und mit ihrem anderen nichtschaltbaren Ende 22 mit mehreren Windungen über die Fläche 19 greift. Das schaltbare Ende 21 ist zur Bildung eines Betätigungszapfens 26 radial nach Außen abgebogen, der in der Gehäuseausnehmung 17 freibeweglich und um die Achse der Friktionsfeder 20 freischwenkbar Platz findet.

Außer der Friktionsfeder 20 greift in die Gehäuseausnehmung 17 eine Schaltvorrichtung 23 ein, die in einer nicht näher dargestellten Weise im Zylinderdeckel 2 drehbar gelagert ist. Außerhalb des Zylinderdeckels 2 stützt sich die Schaltvorrichtung 23 mit ihrem äußeren Ende an dem hülsenförmigen Teil 14 ab, daß an seinem äußeren Ende 24 mit einem Flächenprofil zum Angriff eines Drehwerkzeuges versehen ist. Auch die Schaltvorrichtung besitzt an ihrem das hülsenförmige Teil umfassenden äußeren Ende ein Flächenprofil 25 zum Angriff eines Drehwerkzeuges. Das im Gehäusespalt liegende innere Ende der Schaltvorrichtung 23 befindet sich zum Lösen der Umschlingung des Federendes der Friktionsfeder 20 von der Gehäusefläche 18 im Drehkontakt mit dem Betätigungsende der Friktionsfeder. Der erfindungsgemäße Federspeicher-Bremszylinder arbeitet wie folgt :

Die Speicherfeder 3 wirkt über den Kolben 4 und die am Kolben 4 drehfest gehaltene Mutter 10 auf die Spindel 9 und damit auch auf die Kolbenstange 6. Das über das nichtselbsthemmende Gewinde des Gewindespindeltriebes 9, 10 erzeugte Drehmoment wird mutterseitig über den Kolben 4 und die Feder 3 am Gehäuse 1 abgestützt. Spindelseitig wird das Drehmoment über das Schiebeprofil 13 am Ansatz der Spindel 9 auf das hülsenförmige Teil 14 übertragen, das über die Friktionsfeder 20 zum Gehäuse gesperrt ist. Das die zylindrische Fläche 19 des hülsenförmigen Teiles 14 mit Vorspannung übergreifende Ende 22 der Friktionsfeder 20 liegt kraftschlüssig auf der Fläche 19 fest, während das schaltbare Ende der Friktionsfeder ebenfalls mit Vorspannung die Gehäusefläche 18 übergreift, die an die Fläche 19 im wesentlichen anschließt. Zum Lösen des Federspeicher-Bremszylinders wird die Schaltvorrichtung 23 in Wirkrichtung des Drehmomentes gedreht, um dabei auch den Betätigungszapfen der Friktionsfeder 22 in Drehmomentrichtung zu verschwenken. Hierdurch wird die Eigenvorspannung und damit die Selbsthemmung der Friktionsfeder aufgehoben, so daß sie gehäuseseitig zum Durchrutschen kommt. Auf diese Weise können sich die Spindel 9 und das hülsenförmige Teil 14 zusammen mit der Friktionsfeder 20 drehen, aber nur so weit wie die Schaltvorrichtung 23 zur Lockerung der Kupplung gedreht wird, da beim Abheben des Betätigungszapfens von der Gehäusefläche 18 die Eigenvorspannung der Friktionsfeder wieder wirksam wird und erneut Selbsthemmung eintritt. Entsprechend der Steigung des nichtselbsthemmenden Gewindes des Gewindespindeltriebes 9, 10 müssen ein oder mehrere Umdrehungen ausgeführt werden, bis die Kolbenstange 6 relativ zum Kolben 4 so weit verschoben worden ist, daß der Kolben am Boden des Zylindergehäuses anschlägt und die Bremsgestängedehnung abgebaut ist.

Mit anderen Worten wird die Sperrkupplung in Gestalt der Friktionsfeder 20 erfindungsgemäß durch eine kleine Drehung in Drehmomentrichtung gelöst, da die Schaltvorrichtung durch Anschlag an dem Betätigungsende der Friktionsfeder diese etwas aufweitet. Im gleichen Maße wie die Friktionsfeder gegenüber der Gehäusefläche 18 gelöst ist, vermag sich das hülsenförmige Teil 14 in drehfester Verbindung mit der Spindel 9 in Drehmomentrichtung zu drehen. So wie durch die Drehbewegung der Schaltvorrichtung in Drehmomentrichtung die Sperrkupplung gelöst wird, wirkt die dadurch ermöglichte Drehbewegung des hülsenförmigen Teiles 14 zusammen mit der Drehung der auf ihm kraftschlüssig festgehaltenen Friktionsfeder 20 ebenfalls in Drehmomentrichtung, aber einer Lösung der Kupplung gerade entgegen und schließt diese wieder. Die auf dem hülsenförmigen Teil kraftschlüssig gehaltene Sperrkupplung in der Gestalt der Friktionsfeder eilt also zum unmittelbaren Schließen der Kupplungsverbindung der Drehbewegung der Schaltvorrichtung zum Öffnen der Kupplungsverbindung selbsttätig unmittelbar nach.

So wie die Friktionsfeder über der Gehäusefläche 18 durch eine Drehung der Schaltvorrichtung in Drehmomentrichtung aufgedreht wird, zieht sie sich durch Nachlaufen des hülsenförmigen Teiles selbsttätig wieder zu.

Der wesentliche Vorteil des erfindungsgemäßen Federspeicher-Bremszylinders besteht darin, daß der Kraftfluß zwischen der Speicherfeder und der Kolbenstange bei angelegter Bremse und Ausfall des Druckmediums ohne nennenswerten Kraftaufwand von Hand durch Drehung an der Schaltvorrichtung 23 beliebig « langsam » gelöst werden kann, ohne daß eine besondere Dämpfungsvorrichtung vorhanden sein muß, um die freiwerdende Speicherfederkraft zu dämpfen.

Dabei besteht erstmals sogar die Möglichkeit, einen Federspeicher-Bremszylinder nur teilweise von Hand zu lösen, also die Bremse leicht angelegt zu lassen. Sind zum vollen Lösen der Brems z. B. zwei Umdrehungen der Schaltvorrichtung 23 vorzunehmen, so kann die Bremse von Hand nur teilweise gelöst werden, also leicht eingebremst bleiben, wenn die Schaltvorrichtung nur einmal um ihre Achse gedreht wird, oder auch nur um einen Winkel < 360° verdreht wird.

Bei wiedervorhandenem Druckmedium wird der Kolben 4 gegen die Speicherfeder wieder gespannt, in dem der Raum zwischen dem Kolben und dem Zylinderboden mit dem Druckmedium beaufschlagt wird. Hierzu ist der Zylinderboden 8 mit einem Anschluß für das Druckmedium versehen, der in Fig. 1 nicht eingezeichnet ist. Über das nichtselbsthemmende Gewinde des Gewindespindeltriebes 9, 10 wird die Spindel 6 und damit auch das hülsenförmige Teil 23 und die jetzt als Freilauf wirkende Friktionsfeder 20 gedreht. Das als Betätigungszapfen ausgebildete Schaltende 21 der Friktionsfeder nimmt dabei die Schaltvorrichtung 23 mit. Auf diese Weise ist der Federspeicher-Bremszylinder wieder betriebsbereit.

Durch Drehen am Ende 24 des hülsenförmigen Teiles 14 kann mit entsprechendem Kraftaufwand der notgelöste Federspeicher-Bremszylinder wieder angelegt werden. Zur Reduzierung der Handkraft kann die Betätigung auch über ein nichtselbsthemmendes Übersetzungsgetriebe vorgenommen werden.

Die erfindungsgemäß verwendete Sperrkupplung in Gestalt der Friktionsfeder 20 ist also derart zwischen der Gehäusefläche 18 und der Fläche 19 am hülsenförmigen Teil 14 angeordnet, daß sie einerseits bei ihrer Lösung durch die in Drehmomentrichtung gedrehte Schaltvorrichtung in Schließrichtung der Sperrkupplung selbsttätig nacheilend ausgebildet ist, andererseits aber in entgegengesetzter Drehrichtung als Freilauf wirkt.

Die Friktionsfeder stellt sich in der erfindungsgemäßen Anwendung, also als eine willkürlich schaltbare Sperrkupplung dar, die einen in Drehmomentrichtung sperrenden, aber in entgegengesetzter Drehrichtung wirksamen Freilauf aufweist. Erst hierdurch ist eine beliebig langsame oder auch nur teilweise Notlösung der Bremse bei ausgefallenem Druckmedium und eine selbsttätige Wiederbereitstellung der Bremse nach Rückgewinnung des Druckmediums sowie eine Einbremsung der Bremse möglich.

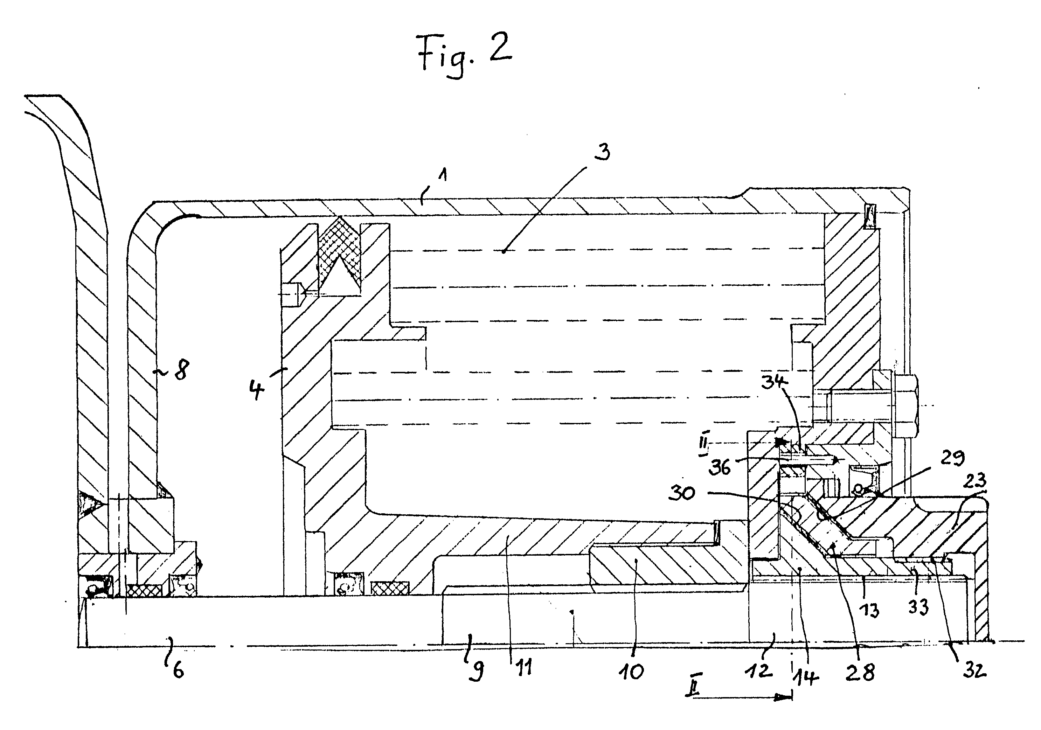

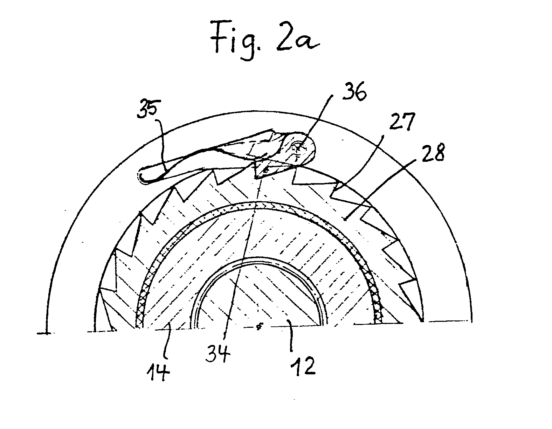

Fig. 2 zeigt einen ähnlichen Federspeicher-Bremszylinder wie nach Fig. 1, der sich in seiner Arbeitsweise nicht oder nicht wesentlich von der des vorstehend beschriebenen Federspeicher-Bremszylinders unterscheidet. Gleiche Bezugszeichen in den Figuren 1 und 2 beziehen sich auf gleiche oder entsprechende Teile.

Ein wesentlicher Unterschied des Federspeicher-Bremszylinders nach Fig. 2 gegenüber dem nach Fig. 1 besteht darin, daß die Sperrkupplung in Fig. 2 als Konusbremse ausgebildet ist, die durch eine im Zylindergehäuse gelagerte federbelastete Sperrklinke gegen Verdrehung in Drehmomentrichtung gesichert ist. Mehr im einzelnen besteht die Konusbremse nach der Erfindung aus einer mit Sperrzähnen 27 versehenen Konusringscheibe 28 (Fig. 2a), die zur Abstützung des drehmomentbelasteten hülsenförmigen Teiles am Zylinderdeckel 2 innerhalb eines Konusspaltes 29 festbremsbar ausgebildet ist, der von einer ersten Konusschrägfläche 30 an dem hülsenförmigen Teil 14 und einer zweiten Konusschrägfläche an der Schaltvorrichtung 23 gebildet ist, welche wiederum im Gehäusedeckel 2 drehbar gelagert ist.

Darüberhinaus ist die Schaltvorrichtung an einer zylindrischen Innenfläche mit einem Gewinde 32 versehen, das in eine entsprechende Verschraubung am äußeren Ende 33 des hülsenförmigen Teiles 14 eingreift. Diese Verschraubung ist derart beschaffen, daß die Schaltvorrichtung 23 zum Lösen der Konusscheibe 28 in dem Konusspalt 29 bei ihrer Drehung in Drehmomentrichtung den Konusspalt erweiterend ausgebildet ist, und daß das drehmomentbelastete hülsenförmige Teil 14 zum erneuten Festbremsen der Konusbremse durch Verengung des Konusspaltes der Drehbewegung der Schaltvorrichtung 23 nachlaufend ausgebildet ist. Die durch die Friktionsfeder 20 nach Fig. 1 bewirkte Reibungskupplung ist in Fig. 2 und Fig. 2a durch eine selbsthemmende Konuskupplung ersetzt, deren Freilauf durch ein separat angeordnetes Klinkengesperre gebildet ist.

Das Klinkengesperre umfaßt eine durch eine Feder 35 ständig in Sperrichtung belastete Sperrklinke 34 zum Eingriff in die Verzahnung 27 der Konusscheibe 28. Hierzu ist die Sperrklinke 34 in einem Spalt des Zylinderdeckels 2 um einen Bolzen 36 schwenkbar angeordnet. In Freilaufrichtung (in Fig. 2a entgegengesetzt dem Uhrzeigersinn) läuft die zwischem dem hülsenförmigen Teil 14 und der Schaltvorrichtung 23 eingeklemmte Konusringscheibe unter der Sperrklinke durch, die dabei von Zahnlücke zu Zahnlücke springt. In Sperrichtung (Fig. 2a im Uhrzeigersinn) ist jede Drehbewegung der Konusringscheibe 28 durch die in eine Zahnlücke einrastende Sperrklinke gesperrt.

Der Federspeicher-Bremszylinder nach Fig. 2 arbeitet wie folgt :

Ist der Federspeicher-Bremszylinder eingebremst, läuft der Kraftfluß zwischen der Feder 3 und dem Kolben 6 über die mit dem Kolben drehfest gehaltene Mutter 10 und die Spindel 9, die mit der Kolbenstange 6 einstückig ist. Die Spindel 9 ist gegen Verdrehen über das hülsenförmige Teil 14, die Konusbremse 28 und die Sperrklinke 34 in Drehmomentrichtung gegen Verdrehen gesichert.

Durch Drehen der Schaltvorrichtung 23 in Drehmomentrichtung wird die zwischen den Flächen 29 und 30 festgebremste Konusscheibe gelockert. Das über ein Schiebeprofil 13 mit der drehmomentbelasteten Spindel 9 drehfeste hülsenförmige Teil 14 kann dadurch der Drehbewegung der Schaltvorrichtung 23 unmittelbar folgen. Durch das Rutschen der Konuskupplung wird die Energie der Speicherfeder wie auch bei der Ausführung nach Fig. 1 in Reibungswärme umgesetzt. Wird die Drehbewegung der Schaltvorrichtung unterbrochen, bremst das nachgelaufene hülsenförmige Teil die Konuscheibe 28 wieder fest.

Beim Beaufschlagen mit Lösedruck in dem Raum zwischen dem Zylinderboden 8 und dem Kolben 4 über einen nichtdargestellten Druckmittelanschluß wird der Kolben mit der Mutter 10 nach rechts verschoben. Die Mutter dreht dabei die Kolbenstange 6 mit der Spindel 9, dem hülsenförmigen Teil 14, der Konusringscheibe 28 und der Schaltvorrichtung 23. Die in Freilaufrichtung drehende Konusringscheibe 28 hebt dabei die Sperrklinke aus ihrer Raststellung. Es ist im übrigen dem Fachmann klar, daß diese Art von Freilauf mit einem Klinkengesperre durch einen anderen entsprechend wirkenden Freilauf ersetzt sein kann.

Wird das hülsenförmige Teil 14 entsprechend Fig. 1 z. B. mit einem Sechskantprofil 24 ausgestattet und stützt sich dann die als Ring ausgebildete Schaltvorrichtung 23 entsprechend wie in Fig. 1 auf dem hülsenförmigen Teil 14 außerhalb des Zylinders 1 ab, dann kann, wie in Fig. 1, durch Drehen an den Sechskant mit entsprechendem Kraftaufwand der vorher notgelöste Federspeicher-Bremszylinder bei fehlendem Druckmittel wieder zur Anlage gebracht werden. Auch hier kann dann zur Reduzierung der Handkraft die Betätigung über ein nichtselbsthemmendes Übersetzungsgetriebe erfolgen.

Wird das hülsenförmige Teil 14 entsprechend Fig. 1 z. B. mit einem Sechskantprofil 23 ausgestattet, und stützt sich dann die als Ring ausgebildete Schaltvorrichtung 23 entsprechend wie in Fig. 1 auf den hülsenförmigen Teil 14 außerhalb des Zylinders 1 ab, dann kann, wie in Fig. 1 durch Drehen an dem Sechskant mit entsprechendem Kraftaufwand der vorher notgebremste Federspeicher-Bremszylinder bei fehlendem Druckmittel wieder angelegt werden. Auch hier kann dann zur Reduzierung der Handkraft die Betätigung über ein nichtselbsthemmendes Übersetzungsgetriebe erfolgen. Die gleichen Vorteile, wie sie vorstehend im Zusammenhang mit dem Federspeicher-Bremszylinder nach Fig. 1 angegeben sind, gelten auch für den Federspeicher-Bremszylinder nach Fig. 2 und 2a. Das heißt, bei einer Notlösung von Hand ohne Druckmitteldruck kann wahlweise eine vollständige oder auch nur eine teilweise Lösung der Bremse vorgenommen werden ; und auch hier ist entsprechend wie bei dem Ausführungsbeispiel nach Fig. 1 der vorher notgelöste Federspeicher-Bremszylinder bei wiederverfügbarem Bremsmitteldruck durch Beaufschlagung des Zylinders mit dem Bremsmitteldruck automatisch in die betriebsbereite Stellung zurückführbar.

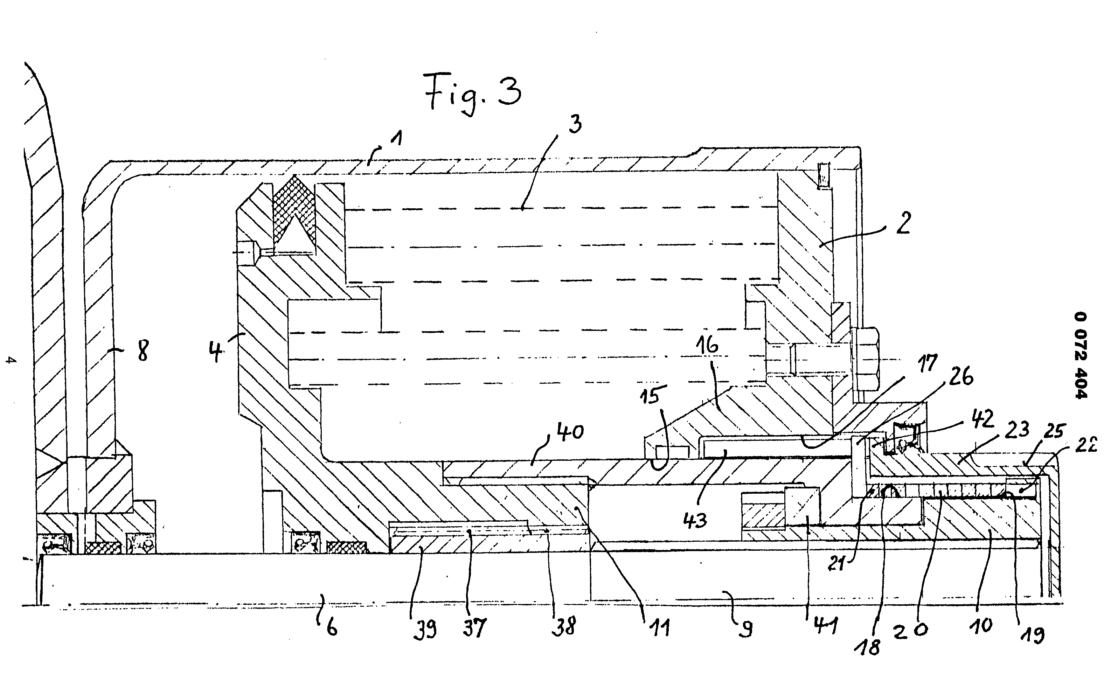

Fig. 3 zeigt einen weiteren Federspeicher-Bremszylinder nach der Erfindung, in der, ähnlich wie in Fig. 1, als schaltbare Sperrkupplung eine Friktionsfeder verwendet wird. Gleiche oder gleichartige Teile in den Figuren 1 und 3 sind somit mit den gleichen Bezugszeichen versehen.

Im Unterschied zu der Ausführung nach Fig. 1 ist in der Ausführung nach Fig. 3 die mit der Gewindespindel 9 einstückige Kolbenstange 6 über ein Schiebeprofil undrehbar zum Kolben gehalten und die drehbar am Kolben gelagerte Mutter 10 des Gewindespindeltriebes 9, 10 ist über die Friktionsfeder 20 zum Kolben gesperrt.

Mehr im einzelnen besitzt der Kolben 4 einen rohrförmigen Ansatz 11, der mit einem Profilabschnitt 38 zur Bildung des Schiebeprofils 37 in ein an der Kolbenstange 6 festgehaltenes Profilteil 39 axial verschieblich eingreift. Die mit den Kolben 4 drehfest gehaltene Kolbenstange 6 ist auch in diesem Ausführungsbeispiel einstückig mit der Spindel 9 des Gewindespindeltriebes 9, 10 ausgebildet. Am abgewinkelten Ende einer rohrförmigen Verlängerung 40 am Kolbenansatz 11 ist über ein Lager 41 die Mutter 10 drehbar gelagert, die mit ihrem Gewinde in die Verschraubung der Gewindespindel 9 eingreift. Das äußere Ende der rohrförmigen Verlängerung 40 am Kolbenansatz 11 ist mit einer zylindrischen Fläche 18 versehen, die im Durchmesser etwas größer ist als die entspannte Friktionsfeder 20. Eine weitere zylindrische Fläche 19 befindet sich am Umfang der Mutter 10. Die im wesentlichen an die zylindrische Fläche 18 anschließende zylindrische Fläche 19 weist etwa den gleichen Durchmesser wie die Fläche 18 auf.

Das als Betätigungszapfen 26 ausgebildete, radial nach außen abgebogene schaltbare eine Ende 21 der Friktionsfeder 20 übergreift mit mehreren Windungen die Fläche 18 an der Kolbenverlängerung 40. Das nichtschaltbare andere Ende der Friktionsfeder übergreift mit mehreren Windungen die Fläche 19 an der Mutter 10. Da die Friktionsfeder mit Vorspannung die Fläche 19 übergreift, ist sie an dieser kraftschlüssig festgehalten. Die rohrförmige Verlängerung 40 an dem Kolbenansatz 11 ist axial verschieblich in einer Öffnung 15 in den verbreiterten Mittelteil 16 des Zylinderdeckels 2 geführt. In der Innenwand der Öffnung 15 ist eine ringförmige Ausnehmung 17 vorgesehen, in die ein verlängerter Abschnitt 42 der Schaltvorrichtung 23 freidrehbar eingreift, die am Zylinderdeckel 2 drehbar gelagert ist. Der verlängerte Abschnitt 42 besitzt einen Schlitz 43, in den das als Betätigungszapfen 26 ausgebildete schaltbare Ende 21 der Friktionsfeder freiaxial verschieblich eingreift.

Im Gegensatz zu der Ausführung nach Fig. 1 ist nach der Ausführung in Fig. 3 die Spindel 9 des Gewindespindeltriebes 9, 10 drehfest und die Mutter 10 des Gewindespindeltriebes drehbar gelagert. Entsprechend der Kolbenbewegung bewegt sich die Mutter 10 entlang der Spindel 9 hin und her. Da die Friktionsfeder 20 mit ihrem nichtschaltbaren Ende an der Mutter 10 festliegt, bewegt sie sich zusammen mit der Mutter. Hierbei kann sich das schaltbare Ende 21 der Friktionsfeder 20 in dem Schlitz 43 der Schaltvorrichtung 23 frei hin und her bewegen, die am Zylinderdeckel drehbar gelagert ist. Unabhängig von der Lage des Kolbens 4 und entsprechend der Mutter 10 innerhalb des Zylinders greift das schaltbare Ende der Friktionsfeder in den Schlitz 43 ein, so daß es in jeder Stellung des Kolbens bzw. der Mutter mit der Schaltvorrichtung 23 in Kontakt ist. Die Funktion des Federspeicher-Bremszylinders nach Fig. 3 entspricht im wesentlichen der Funktion des Federspeicher-Bremszylinders nach Fig. 1. Der Unterschied, daß das drehbare Teil des Gewindespindeltriebes 9, 10 nach Fig. 1 die Spindel 9 und nach Fig. 3 die Mutter 10 ist, und daß nach Fig. 1 die Mutter drehfest am Kolben festgehalten ist, während sie nach Fig. 3 am Kolben drehbar gelagert ist, beeinflußt ersichtlich in keiner Weise die Funktions des Federspeicher-Bremszylinders. Auch wirken die Friktionsfedern 20 nach den Figuren 1 und 3 in der gleichen Weise. In beiden Fällen ist die Friktionsfeder 20 mit ihrem nichtschaltbaren Ende 22 am drehbar gelagerten Teil des Gewindespindeltriebes 9, 10 fest, während das schaltbare Ende der Friktionsfeder an einem drehfesten Teil am Gehäuse (Fig. 1) oder am Zylinder (Fig. 3) angreift. Dadurch daß die Friktionsfeder nach Fig. 1 axial festgehalten und die Friktionsfeder nach Fig. 3 mit der Mutter 10 axial verschieblich angeordnet ist, ergeben sich keinerlei Wirkungsunterschiede.

Ein entscheidender Unterschied zwischen der Ausführung nach Fig. 1 und der Ausführung nach Fig. 3 besteht jedoch konstruktiv darin, daß das Drehmoment des Gewindespindeltriebes 9, 10 nicht über das Gehäuse, wie in Fig. 1, sondern innerhalb des Systems Kolben-Kolbenstange abgestützt ist. Im Gegensatz zu der Ausführung nach Fig. 1, wo bei jeder normalen Bremsbetätigung eine Relativbewegung zwischen der Spindel 9 bzw. der Kolbenstange 6 und dem am Gehäuse axial festgehaltenen hülsenförmigen Teil 14 und damit Reibungs und Verschleiß in dem Schiebeprofil zwischen dem hülsenförmigen Teil 14 und dem festen Ansatz 12 an der Spindel 9 entsteht, weil das Drehmoment über das hülsenförmige Teil 14 und die Friktionsfeder 20 am Gehäuse abgestützt ist, bewegt sich bei der Ausführung nach Fig. 3 das ganze System Kolben-Kolbenstange-Lösevorrichtung miteinander. Die Schaltvorrichtung ist in beiden Fällen drehbar am Gehäuse gehalten und bewegt sich daher auch bei der Ausführungsform nach Fig. 3 mit der Lösevorrichtung nicht mit, sie ist dafür aber mit einer dem Kolbenhub entsprechend lang ausgebildeten Betätigungsfläche für das hochgestellte schaltbare Ende 21 der Friktionsfeder ausgerüstet. Es ist jedoch dem Fachmann klar, daß auch die Schaltvorrichtung 23 zusammen mit der Lösevorrichtung gegebenenfalls axial verschieblich angeordnet sein kann. Soll nach einer Notlösung eine mechanische Wiedereinbremsung möglich sein, so muß die Mutter 10 nach außen geführt werden und mit einem Sechskant oder dergleichen ausgebildet sein. Zur Reduzierung der erforderlichen Handkraft kann dann auch in diesem Fall die Betätigung über ein nichtselbsthemmendes Übersetzungsgetriebe erfolgen.

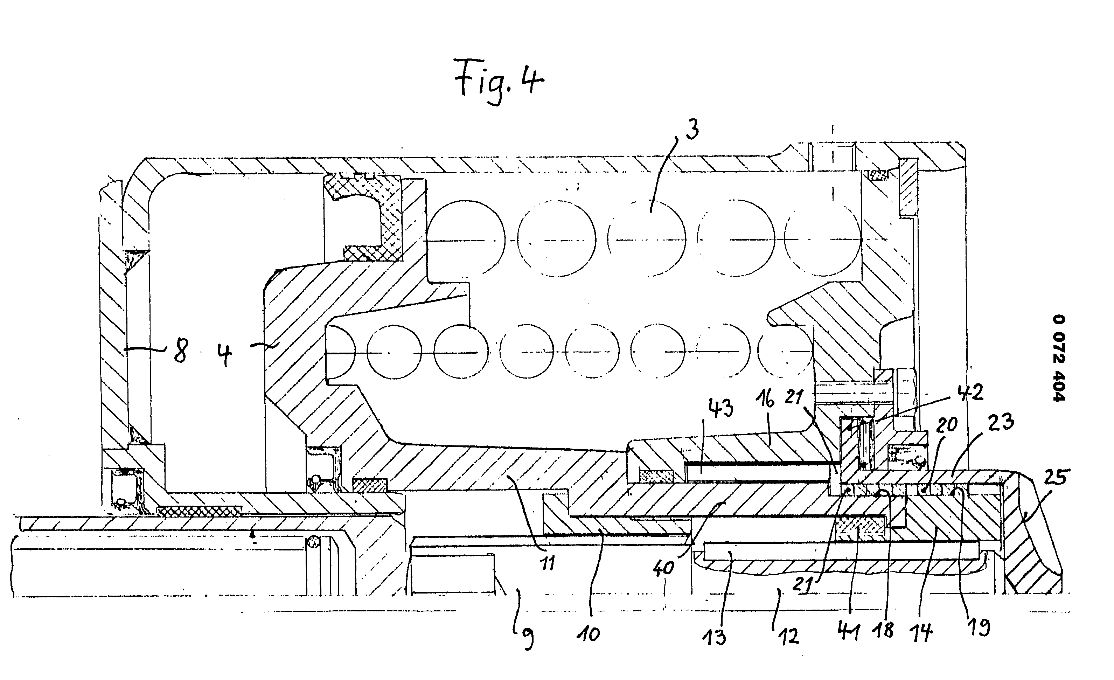

Fig. 4 zeigt noch eine Ausführung nach der Erfindung ähnlich der nach Fig. 1 bzw. Fig. 3. Gleiche oder funktionsgleiche Teile sind mit denselben Bezugszeichen versehen.

Bei den Ausführungen nach den Figuren 1 und 2 sind die Muttern 10 des Gewindespindeltriebes 9, 10 jeweils am Kolben 4 drehfest gehalten, während die Kolbenstange 6 mit der Spindel 9 drehbar gelagert ist. Über ein Schiebeprofil ist außerdem jeweils ein kükenförmiges Teil 14 mit der Kolbenstange 6 bzw. der Spindel 9 drehfest gekuppelt und das nichtschaltbare Ende der Friktionsfeder ist am hülsenförmigen Teil festgehalten.

Um jedoch entsprechend der Ausführung nach Fig. 3 das Drehmoment nicht am Gehäuse wie in Fig. 1, sondern am System Kolben-Kolbenstange abzustützen, um das Schiebeprofil zwischen der Kolbenstange 6 bzw. der Spindel 9 und dem hülsenförmigen Teil 14 reibungsfrei zu halten, ist entsprechend wie in Fig. 3 an dem Ende der rohrförmigen Verlängerung 40 am Kolbenansatz 11 eine Fläche 18 vorhanden, über die das schaltbare Ende 21 der Friktionsfeder 20 mit mehreren Windungen greift. Die Fläche 18 schließt also im wesentlichen entsprechend wie die Gehäusefläche 18 in Fig. 1 an die Fläche 19 an. Die Durchmesser beider Flächen sind damit etwas größer als der Durchmesser der entspannten Friktionsfeder 20.

Das hülsenförmige Teil 14 in Fig. 4 ist jedoch nicht wie in Fig. 1 am Gehäuse festgehalten; vielmehr ist es vergleichbar mit der Mutter 10 in Fig. 3 drehbar an der rohrförmigen Verlängerung 40 des Kolbens 4 festgehalten. Die in Fig. 4 am Gehäusedeckel 2 drehbar gelagerte Schaltvorrichtung ist entsprechend der Schaltvorrichtung nach Fig. 3 ausgebildet, da in beiden Fällen die Lösevorrichtung zusammen mit dem Kolben axial beweglich ausgebildet ist. Während in Fig. 3 die Spindel 9 des Gewindespindeltriebes drehfest und deren Mutter drehbar am Kolben gelagert sind, ist in Fig. 4 die Kolbenstange zusammen mit dem hülsenförmigen Teil 14 drehbar, während die Mutter 10 am Kolben 4 drehfest gehalten ist. Es ist klar, daß damit die Funktion des Federspeicher-Bremszylinders nach Fig. 4 der Funktions des Federspeicher-Bremszylinders nach Fig. 1 im wesentlichen entspricht, nur daß entsprechend, wie in Fig. 3, eine Drehmomentabstützung am Gehäuse vermieden ist, was konstruktiv beachtliche Vorteile mit sich bringt.

In Fig. 4 ist das nichtschaltbare Ende der Friktionsfeder formschlüssig am drehbaren Teil (hier das mit der Spindel 9 drehbare hülsenförmige Teil 14) formschlüssig festgehalten. Hierdurch wird vorteilhafterweise eine Lagefixierung der Schaltvorrichtung relativ zur Spindel erreicht, so daß die Schaltvorrichtung in der eingebremsten Stellung jeweils die gleiche Lage einnimmt.

Es ist klar, daß in den voranstehenden Ausführungsbeispielen das nichtschaltbare Ende ebenfalls formschlüssig mit dem drehbar gelagerten Teil des Gewindespindeltriebes fest sein kann.

**Patentansprüche**

1. Federspeicher-Bremszylinder, insbesondere für Schienenfahrzeuge, mit einer einseitig axial unverschieblich abgestützten Speicherfeder (3), einem von der Speicherfeder beaufschlagten Speicherfederspannkolben (4), einem zwischen dem Speicherfeder-Spannkolben und der Kolbenstange (6) des Spannkolbens angeordneten, bei eingebremstem Zylinder drehmomentbelasteten, nichtselbsthemmenden Gewindespindeltrieb (9, 10) aus zwei Teilen, von denen — relativ zueinander — das eine Teil drehfest gehalten und das andere Teil drehbar gelagert und mittels einer willkürlich schaltbaren, einen in Drehmomentrichtung sperrenden Freilauf umfassenden Sperrkupplung (20, 21 ; 27, 28) relativ zum drehfesten Teil festbremsbar ist, und mit einer relativ zum Gehäuse drehbar angeordneten Schaltvorrichtung (23) zum Lösen der Sperrkupplung, wobei die Schaltvorrichtung (23) bei Betätigung die Sperrkupplung lösend ausgebildet ist, dadurch gekennzeichnet, daß die durch Drehung der Schaltvorrichtung (23) in Drehmomentrichtung lösbar ausgebildete Sperrkupplung (20, 21 ; 27, 28) der Schaltvorrichtung (23) entgegenwirkend selbsttätig unmittelbar nacheilend ausgebildet ist und daß das eine Teil (Mutter 10) des Gewindespindeltriebes (9, 10) axialfest am Kolben (4) gehalten ist.

2. Federspeicher-Bremszylinder nach Anspruch 1, dadurch gekennzeichnet, daß das drehfest gehaltene Teil des Gewindespindeltriebes (9, 10) eine am Federspeicher-Spannkolben feste Mutter (10) ist, und daß das drehbare Teil des Gewindespindeltriebes eine zur Kolbenstange koaxiale Spindel (9) ist, in deren Verschraubung die Mutter angreift, und die an ihrem einen Ende (12) über ein axiales Verschiebeprofil (13) mit einem hülsenförmigen Teil (14) drehfest verbunden ist, das axial unverschieblich im Zylindergehäuse (1, 2) gehalten ist, und wobei zwischen dem hülsenförmigen Teil (14) und einer zylindrischen Kupplungsfläche (18) des Gehäuses (1) die Sperrkupplung (20, 21) angeordnet ist. (Fig. 1).

3. Federspeicher-Bremszylinder nach Anspruch 1, dadurch gekennzeichnet, daß das drehfest gehaltene Teil (10) des Gewindespindeltriebes (9, 10) eine am Federspeicher-Spannkolben (4) feste Mutter ist, und daß das drehbare Teil (9) des Gewindespindeltriebes (9, 10) eine zur Kolbenstange koaxiale Spindel ist, in deren Verschraubung die Mutter eingreift und die an ihrem einen Ende über ein axiales Verschiebeprofil (13) mit einem hülsenförmigen Teil (14) drehfest verbunden ist, das am Speicherfeder-Spannkolben (4) drehbar gehalten ist, und wobei zwischen dem hülsenförmigen Teil (14) und einer zylindrischen Kupplungsfläche (18) am Speicherfeder-Spannkolben (4) die Sperrkupplung (20, 21) angeordnet ist. (Fig. 4).

4. Federspeicher-Bremszylinder nach Anspruch 1, dadurch gekennzeichnet, daß das drehfest gehaltene Teil (9) des Gewindespindeltriebes (9, 10) eine zur Kolbenstange koaxiale Spindel ist, und daß das drehbare Teil (10) des Gewindespindeltriebes eine am Federspeicher-Spannkolben gehaltene Mutter ist, die in die Verschraubung der Spindel eingreift und zwischen der Mutter und einer zylindrischen Kupplungsfläche (18) am Federspeicher-Spannkolben (4) die Sperrkupplung (20, 21) angeordnet ist. (Fig. 3).

5. Federspeicher-Bremszylinder nach einem oder mehreren der vorstehenden Ansprüche, dadurch gekennzeichnet, daß die Sperrkupplung (20, 21) eine Friktionsfeder (20) ist, die mit ihrem einen schaltbaren Ende (21) mit mehreren Windungen die zylindrische Kupplungsfläche (18) am Speicherfeder-Spannkolben (4) übergreift, wobei der Außendurchmesser der Kupplungsfläche (18) größer ist als der Innendurchmesser der entspannten Friktionsfeder (20), und die mit ihrem nichtschaltbaren anderen Ende (22) an dem drehbar gelagerten Teil (10) des Gewindespindeltriebes (9, 10) festgehalten ist. (Fig. 3).

6. Federspeicher-Bremszylinder nach einem oder mehreren der vorstehenden Ansprüche, dadurch gekennzeichnet, daß die Sperrkupplung (20, 21) eine Friktionsfeder (20) ist, die mit ihrem einen schaltbaren Ende (21) mit mehreren Windungen die zylindrische Kupplungsfläche (18) am Gehäuse (1, 2) oder am Speicherfeder-Spannkolben übergreift, wobei der Außendurchmesser der Kupplungsfläche (18) größer ist als der Innendurchmesser der entspannten Friktionsfeder (20), und die mit ihrem nichtschaltbaren Ende (22) an dem mit der drehbar gelagerten Spindel (9) drehfest gehaltenen hülsenförmigen Teil (14) festgehalten ist, wobei die Spindel (9) und die Hülse (14) relativ zueinander axial verschieblich angeordnet sind. (Fig. 1 u. 4).

7. Federspeicher-Bremszylinder nach Anspruch 5, dadurch gekennzeichnet, daß das nichtschaltbare Ende (22) der Friktionsfeder (20) an der drehbar am Speicherfeder-Spannkolben (4, 11, 40) gelagerten Mutter (10) des Gewindespindeltriebes (9, 10) festgehalten ist.

8. Federspeicher-Bremszylinder nach den Ansprüchen 5-7, dadurch gekennzeichnet, daß das nach außen abgebogene schaltbare Ende (21) der Friktionsfeder (20) als Betätigungszapfen (26) ausgebildet ist.

9. Federspeicher-Bremszylinder nach Anspruch 8, dadurch gekennzeichnet, daß der Betätigungszapfen (26) der Friktionsfeder (20) in einen freien Raum (17) des Gehäuses (1, 2) freibeweglich und um die Achse der Friktionsfeder (20) schwenkbar eingreift, und daß die Schaltvorrichtung (23) im Zylindergehäuse (1, 2) drehbar gelagert ist und zum Lösen der Kupplungsfläche (18) von der Umschlingung der Friktionsfeder (20) bei ihrer Drehung in Drehmomentrichtung an dem Betätigungszapfen (26) angreift, wobei das drehmomentbelastete Teil zum erneuten Schließen der Sperrkupplung (20, 21) der Drehbewegung der Schaltvorrichtung (23) selbsttätig nachlaufend ausgebildet ist.

10. Federspeicher-Bremszylinder nach einem oder mehreren der vorstehenden Ansprüche 1-9, dadurch gekennzeichnet, daß die Friktionsfeder (20) mit ihrem schaltbaren Ende (21) im Gehäuse (1, 2) axial unverschieblich angeordnet ist.

11. Federspeicher-Bremszylinder nach einem oder mehreren der vorstehenden Ansprüche 1-9, dadurch gekennzeichnet, daß die Friktionsfeder (20) zusammen mit dem Speicherfeder-Spannkolben (4, 11, 40) axial verschieblich ist.

12. Federspeicher-Bremszylinder nach Anspruch 11, dadurch gekennzeichnet, daß die Schaltvorrichtung (23) ene axiale nut- oder schlitzartige Führung (43) aufweist, in den der Betätigungszapfen (26) der Friktionsfeder (20) freiverschieblich eingreift und daß der die Führung (43) umfassende Teil der Schaltvorrichtung (23) in dem freien Ringraum (17) des Gehäuses (1, 2) um die Achse der Betätigungsvorrichtung freidrehbar angeordnet ist.

13. Federspeicher-Bremszylinder nach einem oder mehreren der vorstehenden Ansprüche, dadurch gekennzeichnet, daß zur Lagefixierung der Schaltvorrichtung (23) relativ zur Spindel (9) das nichtschaltbare Ende (22) der Friktionsfeder (20) formschlüssig mit dem drehbaren Teil des Gewindespindeltriebes (9, 10) verbunden ist.

14. Federspeicher-Bremszylinder nach Anspruch 1, dadurch gekennzeichnet, daß die Sperrkupplung als Konusbremse (27, 28) ausgebildet ist, die durch eine im Zylindergehäuse (1, 2) gelagerte federbelastete Sperrklinke (34) gegen Verdrehung in Drehmomentrichtung gesichert ist.

15. Federspeicher-Bremszylinder nach Anspruch 14, dadurch gekennzeichnet, daß die Konusbremse (27, 28) aus einer mit Sperrzähnen (27) zum Eingreifen des Sperrklinke (34) versehene Konusringscheibe (28) besteht, die zur Abstützung eines drehmomentbelasteten hülsenförmigen Teiles (14) am Zylindergehäuse (1, 2) innerhalb eines Konusspaltes (29) festbremsbar ausgebildet ist, der von dem hülsenförmigen Teil (14) an der Schaltvorrichtung (23) gebildet ist, wobei das hülsenförmige Teil (14) und die Schaltvorrichtung (23) axial miteinander verschraubbar ausgebildet sind. (Fig. 2).

16. Federspeicher-Bremszylinder nach Anspruch 14, dadurch gekennzeichnet, daß die am Zylindergehäuse (1, 2) gelagerte Schaltvorrichtung (23) zum Lösen der Konusbremse (27, 28) in dem Konusspalt (29) bei ihrer Drehung in Drehmomentrichtung den Konusspalt (29) erweiternd ausgebildet ist, und daß das Drehmoment belastete hülsenförmige Teil (14) zum erneuten Festbremsen der Konusbremse (27, 28) durch Verengung des Konusspaltes (29) der Drehbewegung der Schaltvorrichtung (23) nachlaufend ausgebildet ist.

17. Federspeicher-Bremszylinder nach einem oder mehreren der vorstehenden Ansprüche, dadurch gekennzeichnet, daß das drehbar gelagerte hülsenförmige Teil (14) aus dem Zylindergehäuse (1, 2) nach außen geführt ist und zur mechanischen Wiedereinbremsung mit einen Flächenprofil (24) zum Angriff eines Drehwerkzeuges versehen ist. (Fig. 1).

18. Federspeicher-Bremszylinder nach Anspruch 17, dadurch gekennzeichnet, daß die Schaltvorrichtung (23) das aus dem Zylindergehäuse herausgeführte drehbar gelagerte Teil (14) ringförmig umgreift.

19. Federspeicher-Bremszylinder nach einem oder mehreren der vorstehenden Ansprüche, dadurch gekennzeichnet, daß das verlängerte Spindelende außerhalb des Zylindergehäuses (1, 2) zur mechanischen Wiedereinbremsung in Freilaufrichtung der Sperrkupplung mit einem Flächenprofil zum Angriff eines Drehwerkzeuges versehen ist.

20. Federspeicher-Bremszylinder nach einem oder mehreren der vorstehenden Ansprüche, dadurch gekennzeichnet, daß zur reibungsfreien Bewegung der axial verschieblichen Teile (12, 14 ; 4, 6) das bei eingebremsten Zylinder von dem Gewindespindeltrieb (9, 10) abgegebene Drehmoment innerhalb des Systems Kolben-Kolbenstange oder Kolben-Gewindespindeltrieb abgestützt und das Zylindergehäuse (1, 2) drehmomentfrei ausgebildet ist.

21. Federspeicher-Bremszylinder nach Anspruch 20, dadurch gekennzeichnet, daß zwischen dem Kolben (4, 11) und der Kolbenstange (6) ein axiales Schiebeprofil (37) angeordnet ist. (Fig. 3).

22. Federspeicher-Bremszylinder nach Anspruch 20, dadurch gekennzeichnet, daß zwischen dem hülsenförmigen Teil (14) und der Verlängerung (12) der Gewindespindel (9) ein axiales Schiebeprofil (13) angeordnet ist. (Fig. 1, 2 und 4).

23. Federspeicher-Bremszylinder nach Anspruch 21, dadurch gekennzeichnet, daß der Kolben (4) einen rohrförmigen Ansatz (11) aufweist, daß zwischen dem Ansatz und einem Abschnitt der Kolbenstange (6) das Schiebeprofil (37) angeordnet ist, daß an einer rohrförmigen Verlängerung (40) des Kolbenansatzes (11) das als Mutter ausgebildete drehbare Teil (10) des Gewindespindeltriebes drehbar gelagert ist, wobei die Mutter in die Verschraubung des als Gewindespindel ausgebildeten drehfest gelagerten Teiles (9) eingreift, und daß zwischen der Mutter und der Verlängerung (40) des Kolbenansatzes (11) die Sperrkupplung (20, 21) angeordnet ist.

24. Federspeicher-Bremszylinder nach Anspruch 22, dadurch gekennzeichnet, daß der Kolben (4) mit einem rohrförmigen Ansatz (11) versehen ist, daß an dem Ansatz (11) das als Mutter ausgebildete drehbare Teil (10) des Gewindespindeltriebes drehfest angeordnet ist, wobei die Mutter in die Verlängerung des als Gewindespindel ausgebildeten drehbar gelagerten Teiles (9) eingreift, daß an einer rohrförmigen Verlängerung (40) des Kolbensatzes (11) das hülsenförmige Teil (14) drehbar gelagert ist, daß zwischen dem hülsenförmigen Teil (14) und der stangenförmigen Verlängerung (12) der Gewindespindel ein axiales Schiebeprofil (13) vorgesehen ist, und daß zwischen dem hülsenförmigen Teil (14) und der Verlängerung (40) des Kolbenansatzes (11) die Sperrkupplung (20, 21) angeordnet ist.

## Claims

1. Spring-loaded brake cylinder, more particularly for rail vehicles, having a pre-loaded spring (3), which is supported so that axially it is fixed on the one side, a pre-loaded spring-tensioning piston (4), upon which the pre-loaded spring acts, a non-self-locking threaded spindle drive (9, 10), which is arranged between the pre-loaded spring-tensioning piston and the piston rod (6) of the tensioning piston, which is torque-loaded when the cylinder is braked and which consists of two parts, of which — relative to each other — the one part is held so that it is torsionally secure, while the other part is pivoted and may be braked firmly relative to the torsionally secure part by means of a locking coupling (20, 21 ; 27, 28) which may be shifted in an arbitrary manner and which comprises a free-wheeling system which jams in the direction of torque, and having a shifting device (23) which is arranged so that it is rotatable relative to the housing for disengaging the locking coupling, in which case the shifting device (23) is developed to disengage the locking coupling upon actuation, characterised in that the locking coupling (20, 21 ; 27, 28), which is developed so that it may be disengaged through rotation of the shifting device (23) in the direction of torque, is developed so that it is automatically trailing immediately behind, acting in opposition to the shifting device (23), and in that the one part (nut 10) of the threaded spindle drive (9, 10) is held on the piston (4) so that it is axially secure.

2. Spring-loaded brake cylinder according to claim 1, characterised in that the part of the threaded spindle drive (9, 10) which is held so that it is torsionally secure is a nut (10) which is fixed on the spring-loaded tensioning piston and in that the rotatable part of the threaded spindle drive is a spindle (9) which is coaxial to the piston rod, upon whose screwing the nut acts and which at its one end (12) is connected, in a torsionally secure manner via an axial sliding profile section (13), with a sleeve-shaped part (14) which is held so that axially it is fixed in the cylinder housing (1, 2), the locking coupling (20, 21) being arranged between the sleeve-shaped part (14) and a cylindrical coupling surface (18) of the housing (1). (Figure 1).

3. Spring-loaded brake cylinder according to claim 1, characterised in that the part (10) of the threaded spindle drive (9, 10) which is held so that it is torsionally secure is a nut which is fixed on the spring-loaded tensioning piston (4) and in that the rotatable part (9) of the threaded spindle drive (9, 10) is a spindle which is coaxial to the piston rod, into whose screwing the nut engages and which at its one end is connected, in a torsionally secure manner via an axial sliding profile section (13), with a sleeve-shaped part (14) which is held on the pre-loaded spring-tensioning piston (4) so that it is rotatable, the locking coupling (20, 21) being arranged between the sleeve-shaped part (14) and a cylindrical coupling surface (18) on the pre-loaded spring-tensioning piston (4). (Figure 4).

4. Spring-loaded brake cylinder according to claim 1, characterised in that the part (9) of the threaded spindle drive (9, 10) which is held so that it is torsionally secure is a spindle which is coaxial to the piston rod and in that the rotatable part (10) of the threaded spindle drive is a nut which is held on the spring-loaded tensioning piston and which engages into the screwing of the spindle and the locking coupling (20, 21) is arranged between the nut and a cylindrical coupling surface (18) on the spring-loaded tensioning piston (4). (Figure 3).

5. Spring-loaded brake cylinder according to one or several of the preceding claims, characterised in that the locking coupling (20, 21) is a friction spring (20) which overlaps the cylindrical coupling surface (18) on the pre-loaded spring-tensioning piston (4) with its one shiftable end (21) with several turns, in which case the outside diameter of the coupling surface (18) is greater than the inside diameter of the relaxed friction spring (20), and which is held fast with its other, nonshiftable end (22) on the pivoted part (10) of the threaded spindle drive (9, 10). (Figure 3).

6. Spring-loaded brake cylinder according to one or several of the preceding claims, characterised in that the locking coupling (20, 21) is a friction spring (20) which overlaps the cylindrical coupling surface (18) on the housing (1, 2) or on the pre-loaded spring-tensioning piston with its one shiftable end (21) with several turns, in which case the outside diameter of the coupling surface (18) is greater than the inside diameter of the relaxed friction spring (20), and which is held fast with its non-shiftable end (22) on the sleeve-shaped part (14), which is held in a torsionally secure manner with the pivoted spindle (9), the spindle (9) and the sleeve (14) being arranged so that they may be displaced axially relative to each other. (Figures 1 and 4).

7. Spring-loaded brake cylinder according to claim 5, characterised in that the non-shiftable end (22) of the friction spring (20) is held fast on the nut (10) of the threaded spindle drive (9, 10), said nut being pivoted on the pre-loaded spring-tensioning piston (4, 11, 40).

8. Spring-loaded brake cylinder according to the claims 5-7, characterised in that the shiftable end (21) of the friction spring (20), which end is bent off towards the outside, is developed as an actuating peg (26).

9. Spring-loaded brake cylinder according to claim 8, characterised in that the actuating peg (26) of the friction spring (20) engages into a free space (17) of the housing (1, 2) in a freely movable manner and such that it may be slewed about the axis of the friction spring (20) and in that the shifting device (23) is pivoted in the cylinder housing (1, 2) and acts on the actuating peg (26) for the purposes of disengaging the coupling surface (18) from the embrace of the friction spring (20) when it rotates in the direction of torque, in which case the torque-loaded part is developed to close the locking coupling (20, 21) again, automatically following the rotational movement of the shifting device (23).

10. Spring-loaded brake cylinder according to one or several of the preceding claims 1-9, characterised in that the friction spring (20) is arranged with its shiftable end (21) so that it is fixed axially in the housing (1, 2).

11. Spring-loaded brake cylinder according to one or several of the preceding claims 1-9, characterised in that the friction spring (20) may be displaced axially together with the pre-loaded spring-tensioning piston (4, 11, 40).

12. Spring-loaded brake cylinder according to claim 11, characterised in that the shifting device (23) has an axial groove- or slot-like guide (43), into which the actuating peg (26) of the friction spring (20) engages in a freely displaceable manner, and in that the part of the shifting device (23) comprising the guide (43) is arranged in the free annular space (17) of the housing (1, 2) such that it is freely rotatable about the axis of the actuating device.

13. Spring-loaded brake cylinder according to one or several of the preceding claims, characterised in that for the purposes of fixing the position of the shifting device (23) relative to the spindle (9) the non-shiftable end (22) of the friction spring (20) is connected with the rotatable part of the threaded spindle drive (9, 10) in a form-locking manner.

14. Spring-loaded brake cylinder according to claim 1, characterised in that the locking coupling is developed as a cone brake (27, 28) which is secured against torsion in the direction of torque by means of a spring-loaded locking pawl (34) mounted in the cylinder housing (1, 2).

15. Spring-loaded brake cylinder according to claim 14, characterised in that the cone brake (27, 28) consists of a cone ring disc (28) which is provided with locking teeth (27) for catching the locking pawl (34) and which is developed so that it may be braked firmly in order to support a torque-loaded, sleeve-shaped part (14) on the cylinder housing (1, 2) inside a cone gap (29) which is formed by the sleeve-shaped part (14) on the shifting device (23), in which case the sleeve-shaped part (14) and the shifting device (23) are developed so that they may be screwed together axially. (Figure 2).

16. Spring-loaded brake cylinder according to claim 14, characterised in that the shifting device (23), which is mounted on the cylinder housing (1, 2), is developed for the purposes of releasing the cone brake (27, 28) in the cone gap (29) when it rotates in the direction of torque, enlarging the cone gap (29), and in that the torque-loaded, sleeve-shaped part (14) is developed for the repeated firm braking of the cone brake (27, 28) through narrowing of the cone gap (29), following the rotational movement of the shifting device (23).

17. Spring-loaded brake cylinder according to one or several of the preceding claims, characterised in that the pivoted, sleeve-shaped part (14) is guided out of the cylinder housing (1, 2) towards the outside and for the purposes of repeated mechanical braking is provided with a planar profile section (24) for the application of a rotary tool. (Figure 1).

18. Spring-loaded brake cylinder according to claim 17, characterised in that the shifting device (23) annularly encompasses the pivoted part (14) which is guided out of the cylinder housing.

19. Spring-loaded brake cylinder according to one or several of the preceding claims, characterised in that the extended spindle end is provided with a planar profile section for the application of a rotary tool, outside the cylinder housing (1, 2) for the purposes of repeated mechanical braking in the free-wheeling direction of the locking coupling.

20. Spring-loaded brake cylinder according to one or several of the preceding claims, characterised in that for frictionless movement of the axially displaceable parts (12, 14 ; 4, 6) the torque, which is given off from the threaded spindle drive (9, 10) when the cylinder is braked, is supported inside the system piston — piston rod or piston — threaded spindle drive and the cylinder housing (1, 2) is developed with freedom from torque.

21. Spring-loaded brake cylinder according to claim 20, characterised in that an axial sliding profile section (37) is arranged between the piston (4, 11) and the piston rod (6). (Figure 3).

22. Spring-loaded brake cylinder according to claim 20, characterised in that an axial sliding profile section (13) is arranged between the sleeve-shaped part (14) and the extension (12) of the threaded spindle (9). (Figures 1, 2 and 4).

23. Spring-loaded brake cylinder according to claim 21, characterised in that the piston (4) has a tubular attachment (11), in that the sliding profile section (37) is arranged between the attachment and a section of the piston rod (6), in that the rotatable part (10) of the threaded spindle drive which is developed as a nut is pivoted on a tubular extension (40) of the piston attachment (11), in which case the nut engages into the screwing of the part (9) which is developed as a threaded spindle and which is mounted in a torsionally secure manner, and in that the locking coupling (20, 21) is arranged between the nut and the extension (40) of the piston attachment (11).

24. Spring-loaded brake cylinder according to claim 22, characterised in that the piston (4) is provided with a tubular attachment (11), in that the rotatable part (10) of the threaded spindle drive which is developed as a nut is arranged in a torsionally secure manner on the attachment (11), in which case the nut engages into the extension of the pivoted part (9) which is developed as a threaded spindle, in that the sleeve-shaped part (14) is pivoted on a tubular extension (40) of the piston attachment (11), in that an axial sliding profile section (13) is provided between the sleeve-shaped part (14) and the rod-shaped extension (12) of the threaded spindle and in that the locking coupling (20, 21) is arranged between the sleeve-shaped part (14) and the extension (40) of the piston attachment (11).

**Revendications**

1. Cylindre de frein à ressort accumulateur, en particulier pour des véhicules sur rails, avec un ressort accumulateur (3) à appui unilatéral et non déplaçable dans le sens axial, avec un piston d'armement (4) du ressort accumulateur et chargé par le ressort accumulateur, avec une transmission non autobloquante à broche filetée (9, 10), disposée entre le piston d'armement du ressort accumulateur et la tige de piston (6) du piston d'armement et chargée par un couple lorsque le cylindre est dans son état de freinage, laquelle transmission est formée de deux éléments dont — relativement l'un par rapport à l'autre —, le premier élément est maintenu de façon à ne pas pouvoir tourner et dont le second élément est monté à rotation et est susceptible d'être freiné jusqu'à l'arrêt par rapport à l'élément maintenu de façon à ne pas pouvoir tourner, à l'aide d'un accouplement d'arrêt (20, 21 ; 27, 28) comportant une roue libre bloquant dans le sens du couple de rotation, et avec un dispositif de commutation (23) monté à rotation par rapport au carter et servant à dégager l'accouplement d'arrêt, ledit dispositif de commutation (23) étant réalisé de manière à dégager l'accouplement d'arrêt, lorsqu'il est commandé, caractérisé par le fait que l'accouplement d'arrêt (20, 21 ; 27, 28) qui est réalisé de façon à être dégagé par la rotation du dispositif de commutation (23) dans le sens du couple de rotation, est réalisé de manière à agir à l'encontre du dispositif de commutation (23) et à le poursuivre automatiquement et directement, et que le premier élément (écrou 10) de la transmission à broche filetée (9, 10) est maintenu axialement fixe sur le piston (4).

2. Cylindre de frein à ressort accumulateur selon la revendication 1, caractérisé par le fait que l'élément de la transmission à broche filetée (9, 10) et qui est maintenue de façon à ne pas pouvoir tourner, est constitué par un écrou (10) solidaire du piston d'armement du ressort accumulateur, et que l'élément de la transmission à broche filetée qui est susceptible de tourner, est constitué par une broche (9), coaxiale à la tige de piston et dont le filetage est attaqué par l'écrou, l'une des extrémités (12) de ladite broche (9) étant reliée, par l'intermédiaire d'une pièce profilée et axiale de poussée (13), avec un élément en forme de douille (14), sans pouvoir tourner par rapport à celui-ci, douille qui est maintenue dans le carter de cylindre (1, 2) de manière à pouvoir s'y déplacer axialement, la réalisation étant telle que l'accouplement d'arrêt (20, 21) est disposé entre l'élément en forme de douille (14) et une surface cylindrique d'accouplement (18) du carter (1) (figure 1).

3. Cylindre de frein à ressort accumulateur selon la revendication 1, caractérisé par le fait que l'élément (10) de la transmission à broche filetée (9, 10) qui est empêchée de tourner, est constitué par un écrou qui est solidaire du piston d'armement (4) du ressort accumulateur, et que l'élément (9) de la transmission à broche filetée (9, 10), qui est susceptible de tourner, est constitué par une autre broche coaxiale à la tige de piston, dans le filetage de laquelle est engagé l'écrou, et qui est reliée, à l'une de ses extrémités, par l'intermédiaire d'une pièce profilée de poussée axiale (13), avec un élément en forme de douille (14), sans pouvoir tourner par rapport à celle-ci ledit élément étant maintenu, de façon à pouvoir tourner, par le piston d'armement (4) du ressort accumulateur, la réalisation étant telle que l'accouplement d'arrêt (20, 21) est disposé entre l'élément en forme de douille (14) et une surface cylindrique d'accouplement (18) est prévue sur le piston d'armement (4) du ressort accumulateur. (Figure 4).

4. Cylindre de frein à ressort accumulateur selon la revendication 1, caractérisé par le fait que l'élément de la transmission à broche filetée (9, 10) qui est maintenu de façon à ne pas pouvoir tourner, est constitué par une autre broche qui est coaxiale à la tige de piston et que l'élément (10) de la transmission à broche filetée, qui est susceptible de tourner, est constitué par un écrou qui est maintenu sur le piston d'armement du ressort accumulateur, qui pénètre dans le filetage de la broche, l'accouplement d'arrêt (20, 21) étant disposé entre l'écrou et une surface cylindrique d'accouplement (18) qui est prévue sur le piston d'armement (4) du ressort accumulateur. (Figure 3).

5. Cylindre de frein à ressort accumulateur selon une ou plusieurs de revendications antérieures, caractérisé par le fait que l'accouplement d'arrêt (20, 21) est constitué par un ressort de friction (20) qui, par son extrémité commutable (21), passe, avec plusieurs spires, sur la surface d'accouplement cylindrique (18) prévue sur le piston d'armement (4) du ressort accumulateur, le diamètre extérieur de la surface d'accouplement (18) étant supérieur au diamètre intérieur du ressort de friction détendu (20), et qui par son autre extrémité (22), non commutable, est fixé à l'élément tournant (10) de la transmission à broche filetée (9, 10). (Figure 3).

6. Cylindre de frein à ressort accumulateur selon une ou plusieurs des revendications précédentes, caractérisé par le fait que l'accouplement d'arrêt (20, 21) est un ressort de friction (20) qui, avec son extrémité (21) commutable, passe, avec plusieurs spires, sur la surface d'accouplement cylindrique (18) prévue sur le carter (1, 2) ou sur le piston d'armement du ressort accumulateur, le diamètre extérieur de la surface d'accouplement (18) étant supérieur au diamètre intérieur du ressort de friction détendu (20), et qui par son extrémité non commutable (22), à laquelle est fixé l'élément en forme de douille (14) est solidaire en rotation de la broche (9) montée à rotation, la réalisation étant telle que la broche (9) et la douille (14) sont disposées de façon à pouvoir être déplacées axialement l'une par rapport à l'autre. (Figures 1 et 4).

7. Cylindre de frein à ressort accumulateur selon la revendication 5, caractérisé par le fait que l'extrémité (22) non commutable du ressort de friction (20) est fixée à l'écrou (10) de la transmission à broche filetée (9, 10), qui est monté à rotation sur le piston d'armement (4, 11, 40) du ressort accumulateur.

8. Cylindre de frein à ressort accumulateur selon les revendications 5-7, caractérisé par le fait que l'extrémité (21) du ressort de friction (20), qui est coudée vers l'extérieur, est réalisée sous la forme d'un appendice de commande (26).

9. Cylindre de frein à ressort accumulateur selon la revendication 8, caractérisé par le fait que l'appendice de commande (26) du ressort de friction (20) pénètre dans un espace libre (17) du carter (1, 2) de façon à pouvoir s'y déplacer librement et à basculer autour de l'axe du ressort de friction (20), et que le dispositif de commutation (23) est monté à rotation dans le carter de cylindre (1, 2), et attaque, pour le dégagement de la surface d'accouplement (18) par rapport aux spires du ressort de friction (20), lors de sa rotation dans le sens du couple de rotation, l'appendice de commande (26), la réalisation étant telle que l'élément chargé par le couple de rotation est réalisé, en vue de la nouvelle fermeture de l'accouplement d'arrêt (20, 21), de manière à suivre automatiquement le mouvement de rotation du dispositif de commutation (23).

10. Cylindre de frein à ressort accumulateur selon une ou plusieurs des revendications précédentes 1-9, caractérisé par le fait que le ressort de friction (20) est monté, par son extrémité commutable (21), dans le carter (1, 2) de façon à ne pas pouvoir s'y déplacer axialement.

11. Cylindre de frein à ressort accumulateur selon une ou plusieurs des revendications précédentes 1-9, caractérisé par le fait que le ressort de friction (20) est susceptible de se déplacer axialement avec le piston d'armement (4, 11, 40) du ressort accumulateur.

12. Cylindre de frein à ressort accumulateur selon la revendication 11, caractérisé par le fait que le dispositif de commutation (23) comporte un guidage axial en forme de fente ou de gorge (43), dans lequel pénètre, de façon à s'y déplacer librement, l'appendice de commande (26) du ressort de friction (1) et que l'élément du dispositif de commutation (23), qui comporte le guidage (43), est disposé dans l'espace annulaire libre (17) du carter (1, 2) de façon à pouvoir y tourner librement autour de l'axe du dispositif de commande.

13. Cylindre de frein à ressort accumulateur selon une ou plusieurs des revendications précédentes, caractérisé par le fait que pour fixer la position du dispositif de commutation (23) par rapport à la broche (9), l'extrémité (22), non commutable, du ressort de friction (20), est reliée, par formes complémentaires, avec l'élément tournant de la transmission à broche filetée (9, 10).

14. Cylindre de frein à ressort accumulateur selon la revendication 1, caractérisé par le fait que le ressort d'arrêt est réalisé sous la forme d'un frein à cône (27, 28) et qui est assuré contre une rotation dans le sens du couple de rotation, à l'aide d'un cliquet d'arrêt (34) qui est chargé par un ressort et qui est disposé dans le carter de cylindre (1, 2).

15. Cylindre de frein à ressort accumulateur selon la revendication 14, caractérisé par le fait que le frein à cône (26, 28) est constitué par un disque annulaire conique (28) qui est pourvu du cliquet de verrouillage (34) destiné à coagir avec des dents de verrouillage (27), lequel disque annulaire conique est réalisé pour constituer l'appui d'un élément (14), de la forme d'une douille, chargée par le couple de rotation, lequel élément (14) est fixé sur le carter du cylindre (1, 2) et est susceptible d'être freiné à l'intérieur d'une fente conique (29), qui est formée par l'élément (14) en forme de douille du dispositif de commutation (23), l'élément (14) en forme de douille et le dispositif de commutation (23) étant réalisés de façon à pouvoir être vissés entre eux axialement.

16. Cylindre de frein à ressort accumulateur selon la revendication 14, caractérisé par le fait que le dispositif de commutation (23), qui est monté sur le carter de cylindre (1, 2) et qui sert à l'ouverture du frein à cône (27, 28), est réalisé dans la fente conique (29) de manière à élargir, lors de sa rotation dans le sens du couple de rotation, la fente conique (29), et que l'élément (14) en forme de douille et qui est chargé par le couple de rotation, est réalisé, pour un nouveau freinage du frein à cône (27, 28) par la réduction de la fente conique (29), de manière à suivre le mouvement de rotation du dispositif de commutation (23).

17. Cylindre de frein à ressort accumulateur selon une ou plusieurs des revendications précédentes, caractérisé par le fait, que l'élément (14) en forme de douille monté à rotation, est guidé hors du carter du cylindre (1, 2) et est pourvu, pour un nouveau freinage mécanique, d'un profilé (24) destiné à l'attaque d'un outil de rotation. (Figure 1).

18. Cylindre de frein à ressort accumulateur selon la revendication 17, caractérisé par le fait que le dispositif de commutation (23) entoure, de façon annulaire, l'élément (14) qui sort du carter du cylindre et qui est monté à rotation.

19. Cylindre de frein à ressort accumulateur selon une ou plusieurs des revendications précédentes, caractérisé par le fait que l'extrémité prolongée de la broche est pourvue, à l'extérieur du carter de cylindre (1, 2), et pour un nouveau freinage mécanique dans le sens de la roue libre de l'accouplement d'arrêt, d'un profilé de poussée pour l'attaque d'un outil de rotation.

20. Cylindre de frein à ressort accumulateur selon une ou plusieurs des revendications précédentes, caractérisé par le fait que pour le déplacement, sans friction, des éléments (12, 14 ; 4, 6) déplaçables axialement, le couple de rotation qui est fourni, dans le cas du cylindre freiné, par la transmission à broche filetée (9, 10), prend appui à l'intérieur du système à tige de piston et à piston ou du piston-transmission à broche filetée, et le carter de cylindre (1, 2) est réalisé de façon à être dégagé de tout couple de rotation.

21. Cylindre de frein à ressort accumulateur selon la revendication 20, caractérisé par le fait qu'un profilé axial de poussée (37) est disposé entre le piston (4, 11) et la tige de piston (6). (Figure 3).

22. Cylindre de frein à ressort accumulateur selon la revendication 20, caractérisé par le fait qu'entre l'élément (14) en forme de douille et le prolongement (12) de la broche filetée (9), est disposé un profilé axial de poussée (13). (Figures 1, 2 et 4).

23. Cylindre de frein à ressort accumulateur selon la revendication 21, caractérisé par le fait que le piston (4) comporte un appendice tubulaire (11), qu'entre l'appendice et une section de la tige de piston (6), est disposé le profilé de poussée (37) que sur un prolongement tubulaire (40) de l'appendice du piston (11) est monté à rotation l'élément tournant (10) de la transmission à broche filetée, qui est réalisé sous la forme d'un écrou, ledit écrou coagissant avec le filetage de l'élément (9) empêché de tourner et réalisé en tant que broche filetée, et qu'entre l'écrou et le prolongement (14) de l'appendice de piston (11) est disposé l'accouplement d'arrêt (20, 21).

24. Cylindre de frein à ressort accumulateur selon la revendication 22, caractérisé par le fait que le piston (4) est pourvu d'un appendice tubulaire (11), que sur l'appendice (11) est disposé, sans pouvoir y tourner, l'élément (10) de la transmission à broche filetée, qui est réalisé sous la forme d'un écrou, ledit écrou coagissant avec le prolongement de l'élément tournant (9) réalisé sous la forme d'une broche filetée, que sur un prolongement tubulaire (14) de l'appendice de piston (11) est monté en rotation l'élément (14) en forme de douille, qu'entre l'élément (14) en forme de douille et le prolongement (12), en forme de tige, de la broche filetée, est prévu un profilé axial de poussée (13), et qu'entre l'élément tubulaire (14) et le prolongement (40) de l'appendice de piston (11), est disposé l'accouplement d'arrêt (20, 21).

Fig.1

Fig. 2

# Fig. 2a

# Fig. 3

0 072 404

Fig. 4

0 072 404